Europäisches Patentamt

European Patent Office

Office européen des brevets

(11) Veröffentlichungsnummer: **0 481 572 A1**

# EUROPÄISCHE PATENTANMELDUNG

(21) Anmeldenummer: **91250230.9**

(51) Int. Cl.5: **F16K 27/04**, F16K 11/04

(22) Anmeldetag: **20.08.91**

(30) Priorität: **15.10.90 DE 4032991**

(43) Veröffentlichungstag der Anmeldung:
**22.04.92 Patentblatt 92/17**

(84) Benannte Vertragsstaaten:
**AT BE CH DE FR GB IT LI LU NL SE**

(71) Anmelder: **MANNESMANN Aktiengesellschaft**
**Mannesmannufer 2**
**W-4000 Düsseldorf 1(DE)**

(72) Erfinder: **Möller, Rudolf**
**Knülweg 15c**
**W-3007 Gehrden 1(DE)**
Erfinder: **Göttling, Helmut**

**Fuhrenkamp 3**
**W-3004 Isernhagen 4(DE)**
Erfinder: **Janetzko, Horst**
**Eichengrund 8**
**W-3100 Celle(DE)**
Erfinder: **Müller, Peter**
**Ossietzkyring 37 F**
**W-3000 Hannover 91(DE)**
Erfinder: **Scharnowski, Gerhard**
**Im Vogelsang 12**
**W-3007 Gehrden 1(DE)**

(74) Vertreter: **Presting, Hans-Joachim et al**
**Herbertstrasse 22**
**W-1000 Berlin 33(DE)**

(54) **Ventil für Fluide, insbesondere pneumatisch betätigbares Stegventil.**

(57) Ein Ventil für Fluide, insbesondere ein pneumatisch betätigbares Stetigventil (1) besitzt ein Ventilgehäuse (2) und einen im Innern in Verschiedene Schaltstellungen bewegbaren Ventilschieber (3) sowie Vorgesehene Anschlüsse für Arbeits-, Druck- und Entlüftungsleitungen (S, B, P, A, R) und in den einzelnen Schaltstellungen jeweils zusammen mit Abschnitten (3a, 3b, 3c) des Ventilschiebers (3) einen Ventilsitz bildende Ringdichtungen (4).

Um die Vielzahl der einzelnen üblichen Ringdichtungen und die kostenaufwendige Bearbeitung der Ventilgehäuse im Inneren zu ersparen wird vorgeschlagen, daß ein hohler, sich in Ventilachsrichtung (13) erstreckender, den Ventilraum (27) auskleidender, einstückiger Dichtungskörper (28) aus Dichtungsmaterial gebildet ist, an dem die einzelnen Ringdichtungen (4) und Öffnungen für die Anschlüsse geformt sind und daß der Dichtungskörper (28) in eine Ventilgehäuse-Hälfte (29a; 29b) eines zweiteiligen Ventilgehäuses (2) einsetzbar und beide Ventilgehäuse-Hälften (29a, 29b) abgedichtet miteinander verbindbar sind.

Fig.1

EP 0 481 572 A1

Die Erfindung betrifft ein Ventil für Fluide, insbesondere pneumatisch betätigbares Stetigventil, mit einem Ventilgehäuse und mit einem im Inneren gelagerten, in verschiedene Schaltstellungen bewegbaren, abgedichteten Ventilschieber und mit an dem Ventilgehäuse vorgesehenen Anschlüssen für Arbeits-, Druck-, Entlüftungsleitungen u. dgl. und mit in den einzelnen Schaltstellungen jeweils zusammen mit Abschnitten des Ventilschiebers einen Ventilsitz bildenden Ringdichtungen.

Derartige Ventile sind als sogenannte Sitzventile ausgeführt, wobei jedem Ventilsitz eine Dichtscheibe zugeordnet werden muß. Dieses System führt am Ventilgehäuse zu einem erheblichen Kostenaufwand, so daß die Bearbeitung, Messung und Nachbearbeitung relativ schwierig und daher teuer sind. Außerdem ist nach Fertigstellung des Ventilgehäuses an jedem Dichtsitz der Dichtungsring von Hand einzulegen. Insgesamt betrachtet ist die Herstellung und Lagerhaltung solcher aus einer Vielzahl von Teilen bestehender Ventile teuer.

Es ist schon vorgeschlagen worden, bei einer Reihe von Dichtsitzen (z.B. bei 8 Dichtsitzen) die Reihe von Dichtringen axial mit zwei parallel durch die Dicke der Dichtringe verlaufenden Zugstäben zu verbinden und dadurch die Montage zu erleichtern. Hier müssen jedoch die Dichtringe auf einen sehr genauen Abstand gehalten werden, um die angestrebte Dichtwirkung zu gewährleisten.

Ein derartiges Gerippe von einzelnen federndelastischen Dichtringen und härteren axial verlaufenden Zugstäben ist jedoch nicht geeignet, die anstehenden Probleme zu lösen.

Der Erfindung liegt deshalb die Aufgabe zugrunde, ein Ventil für gesteigerte Ansprüche vorzuschlagen, das anderen Anforderungen zusätzlich gerecht wird wie z.B. mit verminderter Reibung und geringer Betätigungskraft funktioniert und mit dem vor allen Dingen die Lagerhaltungskosten, die Montagekosten und die Herstellkosten gesenkt werden können.

Die gestellte Aufgabe wird bei dem eingangs bezeichneten Ventil erfindungsgemäß dadurch gelöst, daß ein hohler, sich in Ventilachsenrichtung erstreckender, den Ventilraum auskleidender, einstückiger Dichtungskörper aus Dichtungsmaterial gebildet ist, an dem die einzelnen Ringdichtungen und Öffnungen für die Anschlüsse geformt sind und daß der Dichtungskörper in eine Ventilgehäusehälfte eines zweiteiligen Ventilgehäuses einsetzbar und beide Ventilgehäusehälften abgedichtet miteinander verbindbar sind. Diese Lösung führt nicht nur zu einem Ventil mit verminderter Reibung und geringer Betätigungskraft, so daß ein weitgehend druckausgeglichenes Ventil gegeben ist, sondern vermindert vor allen Dingen die Herstellungskosten, den Lager- und den Montageaufwand. Zum einen ist die Vielzahl einzelner Dichtungsringe nicht mehr gegeben und zum anderen bedeutet die Zweiteilung des Ventilgehäuses eine leichte und schnelle Zugänglichkeit bei der Herstellung, Nachmessung und eventueller Nachbearbeitung der Dichtungsflächen. Zudem wird die Montage durch Einlegen des einstückigen Dichtungskörpers in eine Ventilgehäusehälfte erheblich vermindert, so daß die Abdichtung der Gehäusehälften in den Hintergrund treten kann.

In Ausgestaltung der Erfindung ist vorgesehen, daß der Dichtungskörper faltenbalgförmig ausgebildet ist und daß an den offenen Enden jeweils verdickte Wandungs- und Flanschbereiche vorgesehen sind. Durch die Wandungs- und Flanschbereiche erhält die Dichtung eine besonders hervorzuhebende Handhabungsfestigkeit und außerdem können Wandungs- und Flanschbereiche an den offenen Enden gleichzeitig als beanspruchungsfeste Dichtungsringe eingesetzt werden.

Nach der weiteren Erfindung ist vorgesehen, daß der Dichtungskörper einem Antrieb für den Ventilschieber gegenüberliegend axial verschlossen ist. Dieser Axialverschluß aus Dichtungsmaterial fungiert gleichzeitig als Dämpfungsmittel zwischen dem Antrieb und dem Ventilschieber. Außerdem ist der vom Fluid durchströmte Raum hermetisch gegenüber dem Antrieb abgeschlossen.

Nach weiteren Merkmalen der Erfindung ist vorgesehen, daß der Dichtungskörper die Ventilgehäuse-Anschlüsse überragend Rohrstutzen bildet. Durch diese Maßnahme entsteht ein völlig sicher abgedichtetes Dichtungssystem, d.h. ein gegenüber den Gehäusehälften abgedichtetes System. Unter Umständen ist es daher möglich, auf eine besondere Abdichtung zwischen den Ventilgehäuse-Hälften zu verzichten.

In Weiterbildung der Erfindung ist Vorgesehen, daß einem Rohrstutzen zugeordnet symmetrisch zu Ventilschieber-Abschnitten glatte oder lippenförmige Ringdichtungs-Flächen angeformt sind. Es können daher besondere Formen der Dichtsitze gewählt werden, ohne an der herkömmlichen Flachform von Dichtungsringen festzuhalten.

Eine weitere alternative Ausführungsform der Erfindung besteht darin, daß der dem Ventilschieber axial gegenüberliegende Antrieb mittels eines Kupplungselementes den einendig verschlossenen Dichtungskörper durchgreift und daß der Dichtungskörper an der entstehenden Öffnung mit einem Dichtungsöffnungsrand dichtet. Der einstückige Dichtungskörper kann daher auch bei einer Kupplungs-Verbindung zwischen Antrieb und Ventilschieber weitestgehend an dem diesseitigen Ende verschlossen werden.

Weitere Merkmale der Erfindung bestehen darin, daß ein zwischen dem Ventilschieber und dem Antrieb verschlossener Dichtungskörper den Antrieb im Ventilgehäuse dichtend umschließt. Bei diesem Ausführungsbeispiel ist der einstückige Dichtungskörper gleichzeitig zur Abdichtung des Antriebs verwendet und daher in seiner funktionellen Gestaltung erweitert.

Eine weitere Verbesserung der Erfindung wird dadurch erzielt, daß der Dichtungsköper zumindest im Bereich der Anschlüsse eingeklebt ist. Dadurch kann die einfachste Gestaltung des Dichtungskörpers eingesetzt werden.

Mehrere Ausführungsbeispiele der Erfindung sind in der Zeichnung dargestellt und werden im folgenden näher beschrieben. Es zeigen:

Figur 1    einen axialen Längsschnitt durch ein pneumatisches Stetigventil mit dem erfindungsgemäßen einstückigen Dichtungskörper,

Figur 2    denselben axialen Querschnitt wie Figur 1 als alternative Ausführungsform des erfindungsgemäßen einstückigen Dichtungskörpers,

Figur 3    denselben axialen Querschnitt wie Figur 1 als weitere Alternative zu dem erfindungsgemäßen einstückigen Dichtungskörper,

Figur 4    denselben axialen Querschnitt wie Figur 1 als weitere Alternative zu dem erfindungsgemäßen einstückigen Dichtungskörper,

Figur 5    denselben axialen Querschnitt wie Figur 1 als zusätzliche Alternative zu dem erfindungsgemäßen einstückigen Dichtungskörper und

Figur 6    den einstückigen Dichtungskörper von oben gesehen als Einzelteil betrachtet.

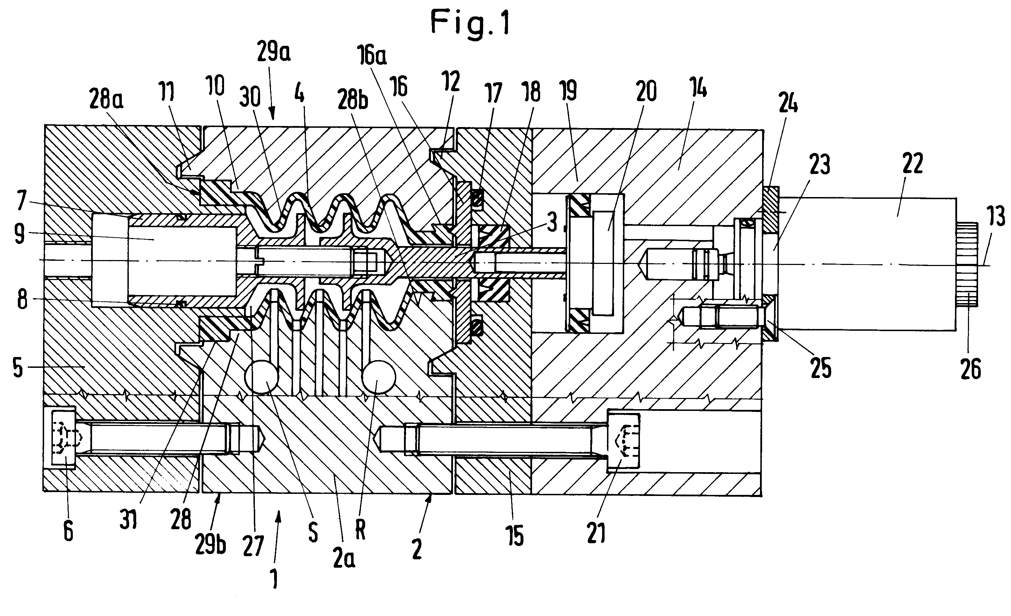

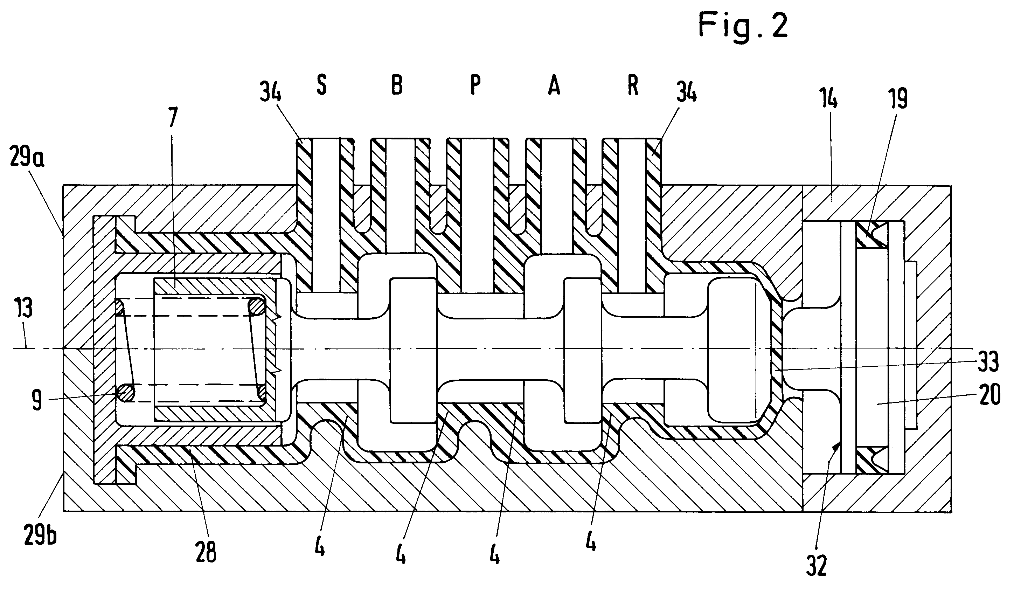

Als Ventil für Fluide, insbesondere als ein pneumatisch betätigbares Stetigventil 1 ist beispielhaft ein 5/2 Wegeventil (Figur 1) dargestellt. Das Stetigventil 1 besitzt ein Ventilgehäuse 2, das ein Ventilgehäuse-Mittelteil 2a bildet. Im Inneren ist ein in verschiedene Schaltstellungen bewegbarer, in den Schaltstellungen jeweils abgedichteter Ventilschieber 3 gelagert. Das Ventilgehäuse 2 weist Anschlüsse R, S (Entlüftungen), p (Druckluft-Netzanschluß) und A, B (Arbeitsleitungen) auf (vgl. Figur 2). In den einzelnen Schaltstellungen bilden Ringdichtungen 4 zusammen mit Abschnitten 3a, und 3b des Ventilschiebers 3 jeweils einen Ventilsitz.

Im allgemeinen sind derartige 5/2-Wegeventile (Figur 1) noch mit einem ersten Deckel 5, der mit Innen-Sechskantschrauben 6 befestigt ist, versehen. Ferner ist (im Ausführungsbeispiel der Figur 1) der Ventilschieber 3 zweiteilig ausgeführt, wobei der linke Teil einen Stößel 7 einer mechanischen oder wie dargestellt eine pneumatische Feder 9 bildet mit einem O-Ring 8 und linker und rechter Teil mittels eines Gewindestifts 10 zusammengehalten und auf Abstand eingestellt werden. Alternativ wird auch ein einstückiger Ventilschieber 3 (ohne den Gewindestift 10) verwendet. Das Ventilgehäuse-Mittelteil 2a weist außerdem konische Ringvorsprünge 11 bzw. konische Ringeindrehungen 12 auf, um eine auf eine Ventilachsenrichtung 13 bezogene Zentrierung aller aufeinanderwirkender Bauteile zu gewährleisten.

Zwischen dem Ventilgehäuse-Mittelteil 2a und einem zweiten Deckel 14 ist ein Zentrierflansch 15 eingefügt, in dem eine Scheibe 16 mit einem Druckring 16a gelagert ist. Gegenüber dem Zentrierflansch 15 ist die Scheibe 16 durch einen O-Ring 17 abgedichtet. Der Ventilschieber 3 wird durch eine Lippendichtung 18 abgedichtet. In den zweiten Deckel 14 ist eine weitere Lippendichtung 19 für einen mit dem Ventilschieber 3 verbundenen Kolben 20 angeordnet. Der zweite Deckel 14 ist mittels weiteren Innen-Sechskantschrauben 21 mit dem Ventilgehäuse-Mittelteil 2a unter Anpressen des zwischenliegenden Zentrierflansches 15 verbunden. Der Antrieb für den Kolben 20, d.h. die zuzuführende Druckluft wird durch eine Elektromagnetspule 22 mit Anker 23, die auf einer Scheibe 24 angeordnet sind, übertragen. Die Scheibe 24 ist mittels Senkkopfschrauben 25 befestigt. Die Befestigung der Elektromagnetspule 22 wird durch eine Rändelmutter 26 bewirkt.

In einem Ventilraum 27 befindet sich nunmehr ein hohler, sich in Ventilachsenrichtung 13 erstreckender, den Ventilraum 27 auskleidender, einstückig hergestellter Dichtungskörper 28 aus spritzfähigem Dichtungsmaterial, an dem die einzelnen Ringdichtungen 4 und Öffnungen für die Anschlüsse S, B, P, A und R usw. geformt sind. Hierbei ist der einstückige Dichtungskörper 28 in eine Ventilgehäuse-Hälfte 29a bzw. 29b eingesetzt, d.h. bei geöffnetem Zustand wird der einstückige Dichtungskörper 28 durch Einlegen montiert.

Das Ventilgehäuse 2 ist hierzu in der Ebene der Ventilachsenrichtung 13 geteilt.

Die Herstellungsweise des einstückigen Dichtungskörpers 28 kann auch zu einer gewissen Spannung im fertigen Teil führen, die im eingebauten Zustand jedoch eine Lageverbesserung, d.h. ein erwünschtes Anschmiegen an Begrenzungen 30 bewirkt. Bei Herstellung kann der Dichtungskörper 28 demzufolge faltenbalgförmig ausgebildet sein und an den offenen Enden 28a und 28b sind jeweils angepaßte verdickte Wandungs- und Flanschbereiche 31 vorgesehen.

Der Dichtungskörper 28 kann einem Antrieb 32 gegenüber (Figur 2), der den Ventilschieber 3 antreibt auch gegenüberliegend axial verschlossen sein, wobei entsprechende Wanddicken 33 vorgesehen sind. Außerdem können an dem Dichtungskörper 28 die Ventilgehäuse-Anschlüsse R, S, P, A, B überragend Rohrstutzen 34 vorgesehen sein (Figuren 2 bis 5).

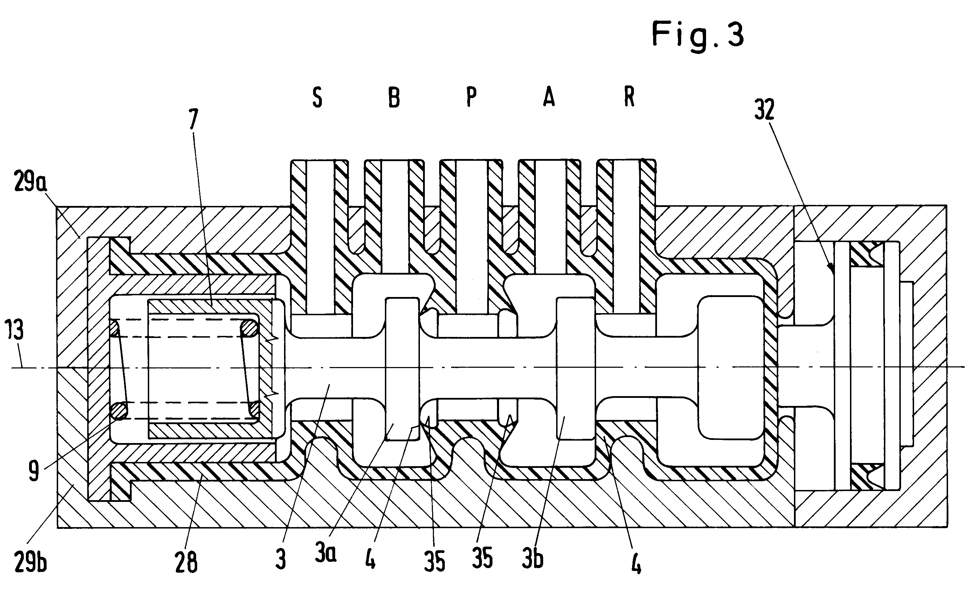

Außerdem können einem Rohrstutzen 34 zugeordnet symmetrisch zu den Ventilschieber-Abschnitten 3a und 3b glatte oder lippenförmige Ringdichtungs-Flächen 35 angeformt sein (vgl. Figur 3).

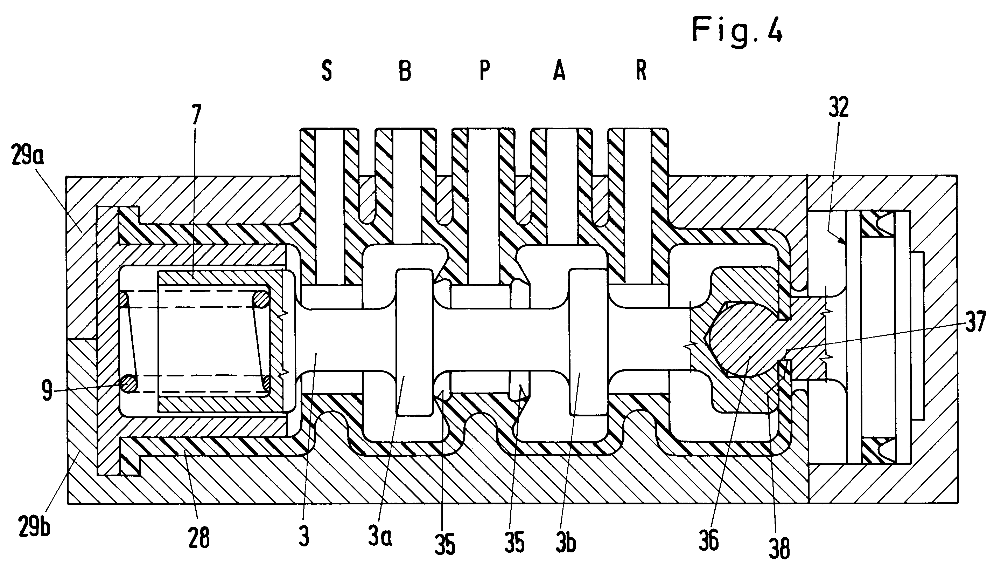

Der Ventilschieber 3 wird von einem axial gegenüberliegenden Antrieb 32 durch ein Kupplungselement 36 durchgriffen, wobei der Dichtungskörper 28 eine Öffnung 37 bildet, jedoch mit einem Dichtungsöffnungsrand 38 abdichtet (vgl. Figur 4).

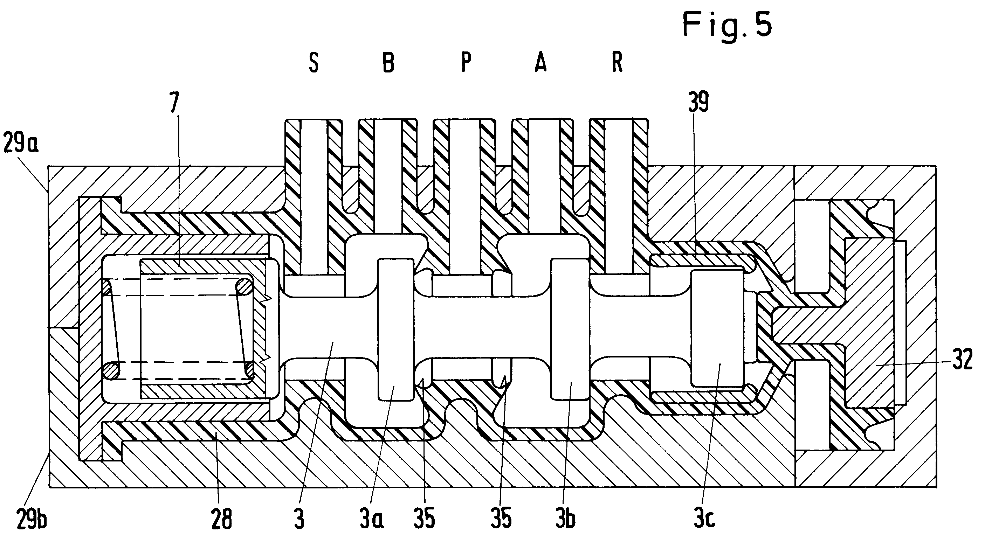

Gemäß einer weiteren Alternative (Figur 5) umschließt ein zwischen dem Ventilschieber 3 und dem Antrieb 32 verschlossener und dann fortgebildeter Dichtungskörper 28 den Antrieb 32 im Deckel 14 weitestgehend. An einem Abschnitt 3c kann noch eine separate Führungsbuchse 39 eingesetzt werden.

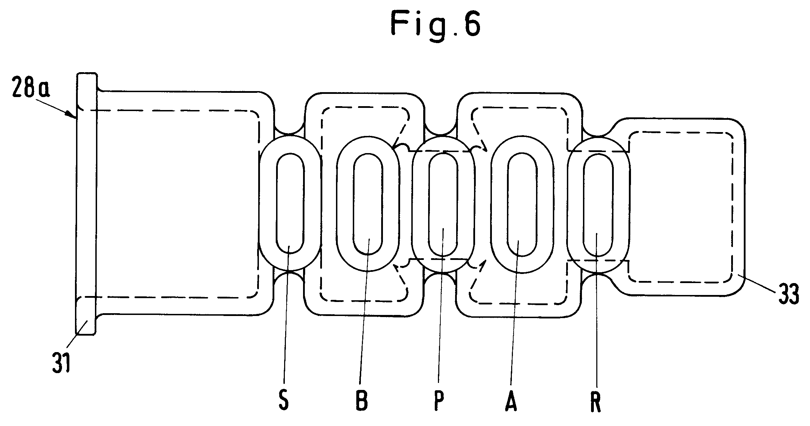

Der Dichtungskörper 28 ist in Figur 6 als einzelner Teil von oben sichtbar dargestellt, so daß die Anschlüsse R, S, P, A, B zu erkennen sind. Es handelt sich hierbei um den in den Figuren 2 bis 4 angewendeten Typ des Dichtungskörpers, bei dem nur das linke Ende 28a offen ist und einen verdickten Wandungs- und Flanschbereich 31 aufweist.

**Patentansprüche**

1. Ventil für Fluide, insbesondere pneumatisch betätigbares Stetigventil, mit einem Ventilgehäuse und mit einem im Inneren gelagerten, in verschiedene Schaltstellungen bewegbaren, abgedichteten Ventilschieber und mit an dem Ventilgehäuse vorgesehenen Anschlüssen für Arbeits-, Druck-, Entlüftungsleitungen u. dgl. und mit in den einzelnen Schaltstellungen jeweils zusammen mit Abschnitten des Ventilschiebers einen Ventilsitz bildenden Ringdichtungen,
   dadurch gekennzeichnet,
   daß ein hohler, sich in Ventilachsenrichtung (13) erstreckender, den Ventilraum (27) auskleidender, einstückiger Dichtungskörper (28) aus Dichtungsmaterial gebildet ist, an dem die einzelnen Ringdichtungen (4) und Öffnungen für die Anschlüsse (S, B, P, A, R) geformt sind und daß der Dichtungskörper (28) in eine Ventilgehäusehälfte (29a, 29b) eines zweiteiligen Ventilgehäuses (2) einsetzbar und beide Ventilgehäusehälften (29a, 29b) abgedichtet miteinander verbindbar sind.

2. Ventil nach Anspruch 1,
   dadurch gekennzeichnet,
   daß der Dichtungskörper (28) faltenbalgförmig ausgebildet ist und daß an den offenen Enden (28a, 28b) jeweils verdickte Wandungs- und Flanschbereiche (31) vorgesehen sind.

3. Ventil nach Anspruch 1,
   dadurch gekennzeichnet,
   daß der Dichtungskörper (28) einem Antrieb (32) für den Ventilschieber (3) gegenüberliegend axial verschlossen ist.

4. Ventil nach einem oder mehreren der Ansprüche 1 bis 3,
   dadurch gekennzeichnet,
   daß der Dichtungskörper (28) die Ventilgehäuse-Anschlüsse (R, S, P, A, B) überragend Rohrstutzen (34) bildet.

5. Ventil nach den Ansprüchen 1, 3 und 4,
   dadurch gekennzeichnet,
   daß einem Rohrstutzen (34) zugeordnet symmetrisch zu Ventilschieber-Abschnitten (3a, 3b) glatte oder lippenförmige Ringdichtungs-Flächen (35) angeformt sind.

6. Ventil nach einem oder mehreren der Ansprüche 1 bis 5,
   dadurch gekennzeichnet,
   daß der dem Ventilschieber (3) axial gegenüberliegende Antrieb (32) mittels eines Kupplungselementes (36) den einendig verschlossenen Dichtungskörper (28) durchgreift und daß der Dichtungskörper (28) an der entstehenden Öffnung (37) mit einem Dichtungsöffnungsrand (38) dichtet.

7. Ventil nach den Ansprüchen 1 und 3 bis 5,
   dadurch gekennzeichnet,
   daß ein zwischen dem Ventilschieber (3) und dem Antrieb (32) verschlossener Dichtungskörper (28) den Antrieb (32) im Ventilgehäuse (2) dichtend mitumschließt.

8. Ventil nach einem oder mehreren der Ansprüche 1 bis 7,
   dadurch gekennzeichnet,
   daß der Dichtungskörper (28) zumindest im Bereich der Anschlüsse (S,B,P,A,R) eingeklebt ist.

Fig.1

# Fig.2

EP 0 481 572 A1

Fig. 3

Fig. 4

S  B  P  A  R

EP 0 481 572 A1

Fig.5

# Fig.6

EP 0 481 572 A1

| | EINSCHLÄGIGE DOKUMENTE | | EP 91250230.9 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) | |
| A | US - A - 3 587 156 (SORENSON) * Figurenbeschreibung; Fig. 6,10,12,20 * -- | 1,3,5,6 | F 16 K 27/04 F 16 K 11/04 | |
| A | PATENT ABSTRACTS OF JAPAN, unexamined applications, M Sektion, Band 5, Nr. 97 24. Juni 1981 THE PATENT OFFICE JAPANESE GOVERNMENT Seite 113 M 75 * Kokai-Nr. 56-42 767 (KOUNAN DENKI K.K.) * -- | 1 | | |
| A | DE - B - 2 308 191 (WABCO) * Figurenbeschreibung; Fig. * -- | 1,5 | | |
| A | CH - A - 570 573 (HONEYWELL GMBH) * Gesamt * -- | 1,3,6 | RECHERCHIERTE SACHGEBIETE (Int. Cl⁵) | |
| A | DE - A - 2 258 251 (SCHNABEL) * Seite 5, Zeilen 12-19 * ---- | 1 | F 16 K F 15 B B 21 K | |

Der vorliegende Recherchenbericht wurde für alle Patentansprüche erstellt.

| Recherchenort | Abschlußdatum der Recherche | Prüfer |
|---|---|---|
| WIEN | 16-12-1991 | ROUSSARIAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82